Europäisches Patentamt

(19) European Patent Office

Office européen des brevets

(11) Numéro de publication : **0 115 724**
**B1**

(12) **FASCICULE DE BREVET EUROPÉEN**

(45) Date de publication du fascicule du brevet :
29.07.87

(21) Numéro de dépôt : **83402457.2**

(22) Date de dépôt : **19.12.83**

(51) Int. Cl.⁴ : **B 25 B   5/10**, B 23 Q   3/06

(54) Dispositif de bridage notamment pour la fixation de pièces sur une machine-outil.

(30) Priorité : **05.01.83 FR 8300072**

(43) Date de publication de la demande :
**15.08.84 Bulletin 84/33**

(45) Mention de la délivrance du brevet :
**29.07.87 Bulletin 87/31**

(84) Etats contractants désignés :
**CH DE GB IT LI NL SE**

(56) Documents cités :
**DE-U- 8 127 044**
**FR-A- 2 169 516**
**FR-A- 2 382 976**
**FR-A- 2 496 530**

(73) Titulaire : **CAROSSINO FRERES, Société dite : Société
à Responsabilité Limitée
Centre Artisanal du Vert-Galant Rue des Oziers
F-95310 Saint-Ouen l'Aumone (FR)**

(72) Inventeur : **Carossino, André
88, Route de la Princesse
F-78430 Louveciennes (FR)**

(74) Mandataire : **Rodhain, Claude
Cabinet Claude Rodhain 30, rue la Boétie
F-75008 Paris (FR)**

Jouve, 18, rue St-Denis, 75001 Paris, France

## Description

La présente invention concerne un dispositif de bridage comprenant un carter présentant une face d'appui et à l'intérieur duquel est disposée une couronne montée rotative autour d'un axe parallèle à la face d'appui sur une portée radiale cylindrique solidaire du carter, cette couronne étant munie d'un bras présentant une extrémité de bridage et faisant saillie hors du carter à travers une ouverture de débattement ménagée en regard de la couronne, latéralement par rapport à la face d'appui, cette couronne étant solidaire, de manière à peu près diamétralement opposée à ce bras d'un secteur denté coopérant avec une vis tangente sensiblement perpendiculaire à la face d'appui, ce secteur denté étant concentrique à la couronne, le carter portant sur cette face d'appui un organe d'ancrage sur le support auquel le dispositif doit être associé et sur la face opposée, une lame de raclage adjacente à la périphérie de la couronne, la portée radiale cylindrique étant formée, au moins en partie, en saillie sur un ou deux flasques latéraux circulaires qui s'emboîtent dans l'épaisseur de la paroi latérale du carter, ladite portée radiale formant un épaulement par rapport à la surface du flasque qui fait face à la couronne.

Le modèle d'utilité allemand DE-U-8 127 044.5 décrit un dispositif de bridage du type précité. On connaît également, par le brevet français FR-A-2 169 516 du demandeur des dispositifs de bridage présentant une structure de ce type, à l'exception de la présence de la lame de raclage qui a été rajoutée entre-temps en vue plus particulièrement de l'application du dispositif à des machines d'usinage par enlèvement de matière, afin de tenter d'éviter la pénétration à l'intérieur du carter de copeaux qui s'opposeraient à un fonctionnement normal du dispositif et même le bloqueraient totalement.

Ces dispositifs avaient été conçus de manière à permettre l'obtention d'efforts de serrage considérables lors du bridage d'une pièce sur un support, ces efforts pouvant atteindre 3 à 4 tonnes, lorsqu'ils sont perfectionnés conformément à un autre brevet français du demandeur FR-A-2 382 976, et ceci par la simple utilisation d'une clé que l'on engage sur l'extrémité de la vis tangente.

Il se trouve toutefois que, dans des dispositifs de ce type, les deux faces latérales de la couronne présentent des zones annulaires de portée latérale dont la dimension radiale est déterminée de manière que les surfaces correspondantes de portée aient une valeur voulue fixée à la conception.

Or, dans les réalisations connues par les brevets précités, la portée radiale cylindrique est formée, au moins en partie, en saillie sur un flasque latéral circulaire qui s'emboîte dans l'épaisseur de la paroi latérale du carter, la partie radiale formant un épaulement par rapport à la surface du flasque qui fait face à la couronne. En général, la portée radiale est formée sur deux flasques latéraux de ce type, se faisant face, disposées dans les deux parois du carter et venant au contact l'un de l'autre.

Néanmoins dans ces réalisations, les portées annulaires latérales de la couronne, qui forment un décrochement transversal par rapport à la partie périphérique de la couronne à laquelle se raccordent le bras de bridage et le secteur denté d'entraînement, sont disposées, dans le sens radial, partiellement en regard des portées latérales des flasques et partiellement en regard des faces intérieures des parois du carter. Il en résulte que, la lame de raclage qui est adjacente à la surface cylindrique extérieure de la couronne déborde latéralement de part et d'autre de celle-ci jusqu'à venir au contact de ces faces intérieures des parois du carter et qu'il subsiste entre ces faces intérieures, les décrochements de la couronne et la lame de raclage, deux passages de section notable en regard de la dimension des copeaux usuels. De la sorte, de tels copeaux peuvent, malgré la présence de la lame de raclage, pénétrer à l'intérieur du carter et venir endommager le mécanisme d'entraînement constitué par le secteur denté et la vis tangente, en nuisant au mouvement de ceux-ci et en pouvant aller jusqu'à leur coincement, des dents pouvant éclater et cette détérioration du mécanisme entraînant la mise au rebut du dispositif.

Par ailleurs, dans les mêmes dispositifs connus, l'organe d'ancrage, qui fait saillie au-dessous de la face d'appui du carter afin de permettre sa fixation dans le support voulu, est maintenu sur le carter en traversant la paroi de celui-ci. Cet organe d'ancrage comprend une tige filetée, qui est engagée dans un trou taraudé ménagé dans la paroi d'appui du carter et dont l'extrémité extérieure, soit reçoit un coulisseau qui s'engage dans une rainure en Té d'un bâti de machine-outil, soit s'engage dans une plaque support servant de plan de montage. Le vissage ou dévissage de la tige filetée permet d'ajuster la hauteur du coulisseau par rapport à la face d'appui du carter et par conséquent de le positionner convenablement en fonction de la profondeur de la rainure de la table.

Toutefois, il est essentiel pour un dispositif de bridage, d'accroître au maximum la distance d'intervention du bras de serrage, c'est-à-dire la distance dont il fait saillie par rapport au carter afin de lui permettre d'être appliqué en des zones d'appui de la pièce à serrer très éloignées, qui sont souvent les seules utilisables à cet effet sur certaines pièces très complexes. Il en résulte donc que l'on réduit au maximum la dimension du carter dans la direction correspondant à l'orientation moyenne du bras de serrage, de sorte que le trou qui reçoit l'organe d'ancrage est ménagé le plus près possible de la couronne rotative, et la face du carter qui présente l'ouverture de débattement du bras de serrage est elle-même réalisée le plus près possible de ce même trou.

Dans le cas où le dispositif doit être utilisé sur le bâti d'une machine-outil, le coulisseau est maintenu par un ressort prenant appui sur la face d'appui du carter, sur la tête d'une vis dont la partie filetée est vissée dans une bague taraudée et épaulée qui se loge dans le trou du carter et prend appui à l'intérieur de la paroi. Le réglage du coulisseau en hauteur se fait avant de l'engager dans la rainure, la tête de la vis présentant un six-pans creux permettant d'utiliser une clé six-pans. Par contre, une fois le coulisseau engagé dans la rainure, il n'est plus possible de serrer cette vis et l'on ne peut donc obtenir un blocage suffisant pour immobiliser le carter et empêcher sa rotation autour de la tige filetée et de sa bague. Il en est de même dans le cas où le dispositif est utilisé sur un plan de montage où il est le plus souvent impossible d'avoir accès à la face inférieure de la plaque pour des raisons d'encombrement. Par ailleurs, dans le cas précédent d'utilisation sur une table à rainure, si celle-ci est disposée verticalement, il est impossible de maintenir le carter dans une position oblique et ceci encore du fait de l'absence de blocage en rotation, alors qu'une telle position oblique du dispositif s'avèrerait souvent nécessaire.

C'est pourquoi la présente invention a pour but de remédier aux différents inconvénients précités et de fournir un dispositif de bridage dans lequel, d'une part, aucune pénétration de copeaux ne soit possible, et qui d'autre part, puisse être immobilisé en rotation dans toute position même en l'absence de possibilités d'accès du côté de la face d'appui.

A cet effet, l'invention a pour objet un dispositif de bridage du type mentionné plus haut, caractérisé en ce que, en regard du flasque ou de chaque flasque, la surface annulaire de portée latérale de valeur déterminée de la couronne présente un contour circulaire extérieur correspondant à la surface périphérique cylindrique courante de la couronne à proximité directe de laquelle vient l'organe de raclage tandis que la surface de portée annulaire du flasque ou de chaque flasque est située très précisément dans le plan de la face intérieure de la paroi correspondante du carter, en ce que, le diamètre de la surface périphérique cylindrique courante de la couronne est au moins inférieur à 1,5 fois le diamètre du fond de gorge des dents du secteur denté, en ce que la face d'appui du carter présente à l'emplacement de l'organe d'ancrage, une surépaisseur par rapport à sa partie située en regard de la zone de débattement du secteur denté, cette surépaisseur de la paroi portant à l'intérieur par rapport à la tête de la tige d'ancrage une seconde lame de raclage dirigée vers la surface courante de la couronne et venant à proximité directe de celle-ci, et en ce que le carter présente un flanc incliné qui se trouve en regard du flanc intérieur de raccordement du secteur denté avec la couronne, lorsque le bras se trouve dans sa position la plus relevée.

Grâce à cet agencement, l'arête circulaire extérieure de la surface de portée latérale de la couronne se trouve pratiquement au droit de la face intérieure de la paroi du carter, au jeu de montage près permettant la mise en place de la couronne entre les deux parois du carter par introduction par l'ouverture de débattement du bras, de sorte que l'angle de la lame de raclage ne laisse subsister aucun passage par rapport à la couronne, au flasque et à la paroi du carter, et qu'en conséquence, aucun copeau ne peut pénétrer à l'intérieur du mécanisme.

Cette réduction de diamètre de la surface courante de la couronne est permise par la conservation de la surface de portée latérale de valeur déterminée et donc, bien entendu, par une réduction nécessaire du diamètre de la portée radiale cylindrique par rapport à celui des dispositifs connus.

Le secteur denté doit présenter un rayon important correspondant à l'effet de démultiplication désiré pour le dispositif de bridage lors de son serrage (à l'aide de la vis tangente).

Avantageusement, l'organe d'ancrage contient une tige filetée qui traverse librement un trou ménagé dans la paroi d'appui du carter et présente à son extrémité intérieure une tête de blocage s'appuyant à l'intérieur de cette paroi, son extrémité opposée filetée étant destinée à se visser dans un élément dudit support, et en ce que l'extrémité extérieure de la tige filetée de l'organe d'ancrage est vissée, de manière réglable, dans un coulisseau pour rainure de table de machine. Par contre, la surface courante de la couronne présente un diamètre relativement réduit, ce qui caractérise le logement de la tête à six-pans creux de la tige filetée d'ancrage et le serrage de cette tête à l'aide d'une clé à six-pans que l'on engage dans l'ouverture de débattement du bras de serrage au-dessous de celui-ci.

L'extrémité extérieure filetée de la tige d'ancrage peut ainsi se visser soit dans un coulisseau destiné à s'engager dans une rainure en T d'une table de machine, soit directement dans un trou taraudé dans un plan de montage. Dans l'un et l'autre cas, le serrage de la tête de la tige d'ancrage assure un blocage et une immobilisation en rotation du dispositif de bridage par rapport à son support.

De manière avantageuse, la lame de raclage située à l'opposé de la paroi d'appui du carter présente une hauteur correspondant sensiblement à la différence de rayon entre le secteur denté et la couronne.

Les caractéristiques et avantages de l'invention ressortiront de la description qui va suivre, à titre d'exemple non limitatif et en regard des dessins annexés sur lesquels :

la figure 1 représente une vue en élévation et en coupe par son plan de symétrie, d'un dispositif de bridage suivant un mode de réalisation particulier, conforme à l'invention ;

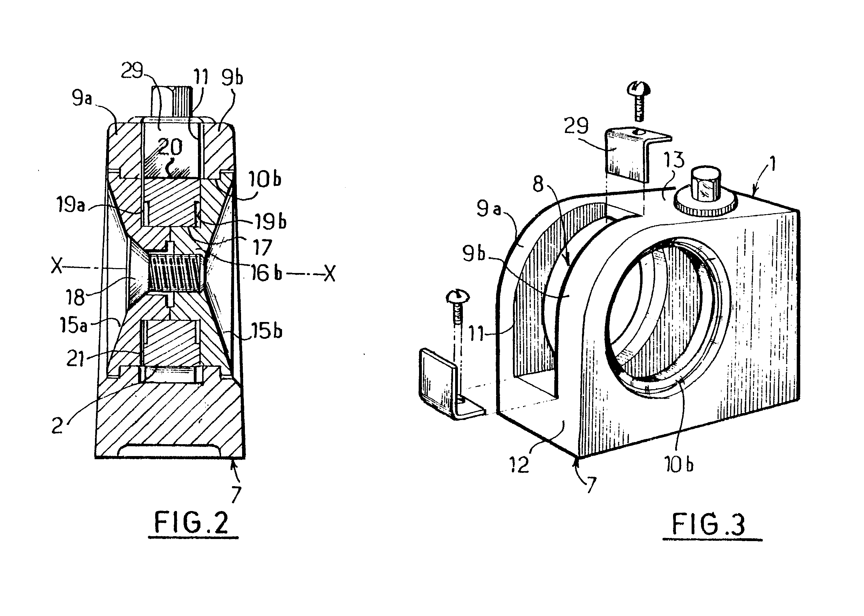

la figure 2 représente une vue en coupe transversale de ce dispositif, prise suivant la ligne II-II de la figure 1 ;

la figure 3 représente une vue en perspective du carter de ce dispositif, avec éclatement des deux lames de raclage.

Le dispositif de bridage représenté par ces figures, comprend un carter 1 dans lequel est disposée une couronne 2 munie d'un bras de serrage 3 et d'un secteur denté 4 engrenant avec une vis tangente 5, ce carter 1 étant par ailleurs muni d'un organe d'ancrage 6.

Le carter 1 est constitué par un bloc parallélépipèdique présentant une surface inférieure ou surface d'appui 7 et qui présente une cavité intérieure 8 à l'intérieur de laquelle est montée tourillonnante la couronne 2 autour d'un axe X-X parallèle à la surface d'appui 7 et perpendiculaire aux deux parois parallèles du carter 9a et 9b qui délimitent transversalement cette cavité. Dans les deux parois 9a et 9b sont ménagées deux ouvertures de section circulaire de grand diamètre 10a et 10b, d'axe X-X et présentant une forme cylindrique étagée plus large du côté extérieur. Outre ces deux ouvertures par lesquelles elle débouche sur les faces transversales du carter, la cavité intérieure 8 s'ouvre également sur la face avant et une partie de la face supérieure de ce carter par une large fente 11 qui s'incurve, de même que la face avant 12 suivant une surface cylindrique se raccordant avec la face supérieure 13 du carter en épousant la forme des ouvertures 10a et 10b à une certaine distance de celles-ci.

Du côté opposé à la face avant 12, la cavité 8 est de délimitée par deux portions de surface cylindrique d'axe X-X et qui correspondent aux parois supérieure et inférieure, en étant séparées par un passage qui fait communiquer cette cavité avec un trou borgne vertical de grand diamètre 14 dans lequel est logée la vis 5.

Dans les deux ouvertures latérales 10a et 10b sont disposés deux flasques 15a et 15b présentant la même forme étagée que ces ouvertures de manière à s'emboîter exactement dans celles-ci, ces deux flasques présentant par ailleurs en leur centre, deux plots cylindriques 16a et 16b qui viennent en butée l'un contre l'autre, de manière à constituer ensemble une portée cylindrique radiale 17. Les deux flasques, qui peuvent présenter des allègements de matière de forme tronconique sur leurs faces extérieures, sont serrés l'un contre l'autre à l'aide d'une vis transversale 18 traversant l'un d'eux et se vissant dans l'autre.

L'ensemble de la portée cylindrique constituée par les deux plots 16a et 16b présente un diamètre relativement réduit par rapport au diamètre moyen de la partie principale des flasques 10a et 10b, par exemple de l'ordre de la moitié, tandis que sa dimension transversale correspond très précisément à la largeur de la fente 11 du carter, de sorte que les deux surfaces annulaires 19a et 19b des deux flasques qui entourent les plots 16a et 16b affleurent pratiquement les faces intérieures des parois 9a et 9b du carter qui délimitent cette fente 11. Ces deux surfaces annulaires 19a et 19b constituent des surfaces de portée latérale pour la couronne 2.

Cette dernière couronne présente une forme annulaire pleine offrant une surface périphérique cylindrique courante 20 dont le diamètre correspond sensiblemnt au diamètre le plus faible de la partie étagée des flasques, et une surface cylindrique intérieure par laquelle elle s'appuie à rotation sur la portée cylindrique 17 des plots 16a et 16b.

Les deux surfaces latérales annulaires de la couronne 2, qui font face aux deux portées latérales 19a et 19b des flasques sont chacune étagées suivant une surface annulaire extérieure (dans le sens radial) 21, qui est légèrement en saillie par rapport à la surface annulaire intérieure, cette surface extérieure 21 constituant une surface de portée transversale coopérant avec celle du flasque en regard. Cette surface de portée se raccorde directement, suivant une arête circulaire, avec la surface périphérique 20 courante de la couronne et l'épaisseur de cette couronne, entre les deux surfaces de portée 21, correspond à l'épaisseur de la fente 11 ou distance séparant les deux parois 9a et 9b du carter, à un jeu de montage près extrêmement faible qui permet l'introduction de la couronne dans la cavité 8 par la fente 11 avant que les flasques ne soient assemblés.

Vers l'avant et vers le haut, du côté de la face avant 12 du carter, un bras de serrage 3 orienté radialement et de forme légèrement incurvée vers le bas est réalisé venu de matière avec la couronne 2 avec une dimension transversale inférieure à celle de cette couronne d'une valeur qui est faible, mais sans commune mesure avec le jeu de montage précité qui est extrêmement réduit. A son extrémité libre, le bras 3 porte un patin articulé 22 destiné à prendre appui sur la pièce à serrer (non représentée).

De manière diamétralement opposée à ce bras 3, le secteur denté 4 est également réalisé venu de matière avec la couronne 2 (par exemple sur 120°) avec une épaisseur transversale qui, comme celle du bras, est inférieure d'une valeur sensible à celle de la couronne. La denture 23 de ce secteur peut se débattre librement à l'intérieur des surfaces cylindriques de la cavité 8 correspondant aux parois supérieure et inférieure, cette denture 23 coopérant avec celle 24 de la vis 5 qui tourillonne verticalement dans deux paliers 25 situés l'un au fond du trou borgne 14 et l'autre au niveau de la paroi supérieure 13 du carter.

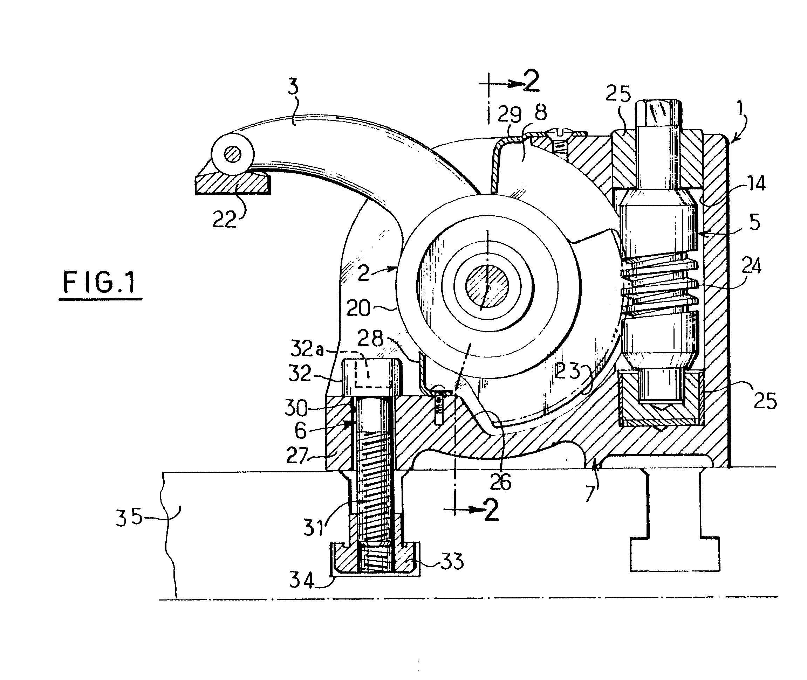

Le diamètre de la denture 23 du secteur est très nettement supérieur à celui de la surface périphérique 20 de la couronne, par exemple, supérieur de la moitié à celui-ci. Lorsque le bras 3 se trouve dans sa position la plus relevée, représentée sur la fig. 1, c'est-à-dire le secteur denté 4, dans sa position la plus basse, le flanc inférieur de raccordement de ce secteur à la couronne 2 se trouve situé en regard d'un flanc incliné 26 qui sépare la partie d'épaisseur normale de la paroi inférieure ou paroi d'appui 7, située au-dessous du secteur 4, d'une partie avant ou surépaisseur 27 dont la surface plane supérieure est située légèrement au-dessous du niveau inférieur de la couronne 2. Sur cette surface supérieure se trouve fixée, légèrement en avant du flanc incliné 26 (qui se trouve lui-même sensiblement à la verticale de l'axe X-X) une lame de raclage coudée 28 dont l'aile verticale présente une arête aigue au voisinage immédiat de la surface 20 de la couronne. Cette lame 28 s'étend sur la même largeur que la partie extérieure de la couronne, entre ses deux surfaces annulaires de portée transversale 21, de sorte qu'il ne subsiste aucun passage, aussi faible soit-il, ni le long de l'arête, ni sur les côtés de cette lame de raclage.

De même, à la verticale et au-dessus de l'axe X-X, se trouve fixée une seconde lame de raclage coudée 29 qui est fixée sur la paroi supérieure 13 du carter par une vis (de même que l'autre lame 28 sur la surépaisseur 27) et dont la partie verticale présente également une arête aigue venant à proximité directe de la surface 20 de la couronne, et également avec la même largeur que la distance séparant les surfaces de portée transversale 21 de celles-ci.

Ainsi, lors d'une opération d'usinage par enlèvement de matière, aucun copeau ne peut pénétrer ni au-dessus, ni au-dessous du bras 3, et venir enrayer le bon fonctionnement du mécanisme du secteur denté 4 et de la vis tangente 5.

La surépaisseur 27 que le flanc incliné 26 définit à l'avant de la paroi inférieure 7 du carter est traversée par un perçage 30 perpendiculaire à cette paroi et situé légèrement à l'avant de l'aplomb de la partie avant de la couronne 2. Dans ce perçage 30 se trouve logée librement une tige filetée 31 présentant à son extrémité supérieure une tête 32 qui présente un six-pans creux 32a et qui s'appuie sur le bord du perçage 30, tandis que sa partie filetée qui fait saillie au-dessous de la paroi 7 vient se glisser dans un coulisseau à section en Té 33 qui est destiné à s'engager dans une rainure de forme correspondante 34 du bâti ou table 35 d'une machine-outil sur laquelle la pièce, non représentée, doit être serrée par le bras 3 et son berceau 22 à l'avant du carter 1. Le coulisseau est réglable en hauteur puisque vissé directement sur la tige filetée 31, de manière à s'adapter sans difficulté à la profondeur de la rainure 34, tandis que par ailleurs, une clé six-pans peut être engagée dans la tête 32 afin de permettre un serrage avec blocage de cette tige filetée et par conséquent une immobilisation du carter 1 sur la table 35 sans aucune possibilité de rotation.

**Revendications**

1. Dispositif de bridage du type comprenant un carter (1) présentant une face d'appui (7) et à l'intérieur duquel est disposée une couronne (2) montée rotative autour d'un axe (X-X) parallèle à la face d'appui (7) sur une portée radiale cylindrique (17) solidaire du carter, cette couronne (2) étant munie d'un bras (3) présentant une extrémité de bridage (22) et faisant saillie hors du carter à travers une ouverture de débattement (11) ménagée en regard de la couronne (2), latéralement par rapport à la face d'appui (7), cette couronne (2) étant solidaire, de manière à peu près diamétralement opposée à ce bras (3) d'un secteur denté (4) coopérant avec une vis tangente (5) sensiblement perpendiculaire à la face d'appui (7), ce secteur denté étant concentrique à la couronne (2), le carter (1) portant sur cette face d'appui (7) un organe (6) d'ancrage sur le support (35) auquel le dispositif doit être associé et sur la face opposée (13), une lame de raclage (29) adjacente à la périphérie de la couronne (2), la portée radiale cylindrique (17) étant formée, au moins en partie, en saillie sur un ou deux flasques latéraux circulaires (15a, 15b) qui s'emboîtent dans l'épaisseur de la paroi latérale du carter, ladite portée radiale (17) formant un épaulement par rapport à la surface du flasque (15a, 15b) qui fait face à la couronne (2), caractérisé en ce que, en regard du flasque (15a) ou de chaque flasque (15a, 15b), la surface annulaire (21) de portée latérale de valeur déterminée de la couronne (2) présente un contour circulaire extérieur correspondant à la surface périphérique cylindrique courante (20) de la couronne (2) à proximité directe de laquelle vient l'organe de raclage (29) tandis que la surface de portée annulaire (19a, 19b) du flasque ou de chaque flasque (15a, 15b) est située très précisément dans le plan de la face intérieure de la paroi correspondante (9a, 9b) du carter, en ce que le diamètre de la surface périphérique cylindrique courante (20) de la couronne (2) est au moins inférieur à 1, 5 fois le diamètre de fond de gorge des dents (23) du secteur denté (4), en ce que la face d'appui (7) du carter (1) présente à l'emplacement de l'organe d'ancrage (6), une surépaisseur (27) par rapport à sa partie située en regard de la zone de débattement du secteur denté (4), cette surépaisseur (27) de la paroi portant à l'intérieur par rapport à la tête (32) de la tige d'ancrage (31) une seconde lame de raclage (28) dirigée vers la surface courante (20) de la couronne (2) et venant à proximité directe de celle-ci, et en ce que le carter (1) présente un flanc incliné (26) qui se trouve en regard du flanc intérieur de raccordement du secteur denté (4) avec la couronne (2), lorsque le bras (3) se trouve dans sa position la plus relevée.

2. Dispositif selon la revendication 1, caractérisé en ce que l'organe d'ancrage (6) comprend une tige filetée (31) qui traverse librement un trou (30) ménagé dans la paroi d'appui (7) du carter (1) et présente à son extrémité intérieure une tête de blocage (32) s'appuyant à l'intérieur de cette paroi (7), son extrémité opposée filetée étant destinée à se visser dans un élément (33) dudit support (35), et en ce que l'extrémité extérieure de la tige filetée (31) de l'organe d'ancrage (6) est vissée, de manière réglable, dans un coulisseau (33) pour rainure (34) de table de machine (35).

3. Dispositif selon l'une des revendications 1 ou 2, caractérisé en ce que la lame de raclage (29) située à l'opposé de la face d'appui (7) du carter (1) présente une hauteur correspondant sensiblement à la différence de rayon entre le secteur denté (4) et la couronne (2).

## Claims

1. Clamping device of the type comprising a housing (1) having a support face (7) and in the interior of which housing is disposed a ring (2) mounted so as to be rotatable about an axis (X-X) parallel to the support face (7) on a cylindrical, radial bearing (17) integral with the housing, this ring (2) being provided with an arm (3) which has a clamping end (22) and projects outside the housing through a clearance opening (11) provided opposite the ring (2), laterally with regard to the support face (7), this ring (2) being integral, in a manner almost diametrically opposed to this arm (3), with a toothed sector (4) co-operating with a tangential screw (5) substantially perpendicular to the support face (7), this toothed sector being concentric with the ring (2), the housing (1) carrying, on this support face (7), an anchoring means (6) for securement to the support (35), with which the device is to be associated and carrying, on the opposite face (13), a scraper blade (29) adjacent to the periphery of the ring (2), the cylindrical, radial bearing (17) being formed, at least in part, so as to project over one or two circular, lateral flanges (15a, 15b) which fit into the thickness of the lateral wall of the housing, said radial bearing (17) forming a shoulder relative to the surface of the flange (15a, 15b) which faces the ring (2), characterised in that, opposite the flange (15a) or each flange (15a, 15b), the lateral, annular bearing surface (21) of a predetermined value of the ring (2) has an outer, circular configuration corresponding to the current, cylindrical, peripheral surface (20) of the ring (2), the scraper means (29) coming into direct proximity with the peripheral surface, while the annular bearing surface (19a, 19b) of the flange or of each flange (15a, 15b) is situated very precisely in the plane of the internal face of the corresponding wall (9a, 9b) of the housing, in that the diameter of the current, cylindrical, peripheral surface (20) of the ring (2) is at least less than 1.5 times the diameter of the notch base of the teeth (23) of the toothed sector (4), in that the support face (7) of the housing (1) has, at the location of the anchoring means (6), an extra thickness (27) relative to its portion situated opposite the clearance zone of the toothed sector (4), this extra thickness (27) of the wall carrying, in the interior relative to the head (32) of the anchoring shank (31), a second scraper blade (28) directed towards the current surface (20) of the ring (2) and coming into direct proximity therewith, and in that the housing (1) has an inclined flank (26) which is situated opposite the inner flank for connecting the toothed sector (4) to the ring (2) when the arm (3) is in its highest position.

2. Device according to claim 1, chararacterised in that the anchoring means (6) comprises a threaded shank (31) which passes freely through a hole (30) provided in the supporting wall (7) of the housing (1) and has, at its inner end, a blocking head (32) resting inside this wall (7), its opposite, threaded end being intended to be screwed into an element (33) of said support (35), and in that the outer end of the threaded shank (31) of the anchoring means (6) is screwed, in an adjustable manner, into a guideblock (33) for groove (34) in machine table (35).

3. Device according to one of claims 1 or 2, characterised in that the scraper blade (29) situated opposite the support face (7) of the housing (1) has a height corresponding substantially to the difference in radius between the toothed sector (4) and the ring (2).

## Patentansprüche

1. Spannvorrichtung, bestehend aus einem mit einer Auflagefläche (7) versehenem Gehäuse (1), in dem drehbar um eine zur Auflagefläche (7) parallele Achse (x-x) ein Kranz (2) auf einem radial zylindrischen und zum Gehäuse (1) festen Träger (17) gelagert und mit einem Arm (3) versehen ist, der einen spannausleger (22) bildet und der quer aus einer entsprechenden ausgesparten Öffnung (11) des Gehäuses (1) in bezug auf den Kranz (2) nach außen herausragt, wobei der Kranz (2) in bezug auf die Auflagefläche (7) seitlich etwa diametral gegenüber dem Arm (3) durch einen gezahnten und zum Kranz konzentrischen Sektor (4) festgelegt ist, der mit einer Schnecke (5) zusammenwirkt, die im wesentlichen senkrecht gegen die Auflagefläche (7) gerichtet ist und wobei das Gehäuse (1) an der Auflagefläche (7) ein Verankerungselement (6) für den Träger (35) aufweist, auf dem die Vorrichtung anzuordnen ist und an der gegenüberliegenden Fläche (13) benachbart zur Umfangsfläche des Kranzes (2) ein Abstreichblatt (29) und wobei der radial zylindrische Träger (17) mindestens zum Teil aus einer oder zwei seitlichen kreisförmigen Scheiben (15a, 15b) hervorspringt, die eingefügt sind in die Stärke der Seitenwand des Gehäuses (1) und der radiale Träger (17) eine Tragschulter in bezug auf die Scheiben (15a, 15b) bildet, die gegen den Kranz (2) gerichtet ist. Dadurch gekennzeichnet, daß in Betracht der Scheibe (15a) oder jede Scheibe (15a, 15b) die ringförmige, seitlich mit einem bestimmten Wert vom Kranz (2) getragene Fläche (21) eine äußere Kreiskontur bildet korrespondierend zur äußeren zylindrischen Umfangsfläche (20) des Kranzes (2), gegen die nahekommend das Abstreifelement (29) gerichtet ist, während die ringförmige Tragfläche (19a, 19b) der Scheibe oder jeder Scheibe (15a, 15b) präzise in der Ebene der Innenfläche der korrespondierenden Wand (9a, 9b) des Gehäuses (1) angeordnet ist und daß der Durchmesser der zylindrischen Umfangsfläche (20) des Kranzes (2) mindestens um das 1,5-fache geringer ist als der Durchmesser des Grundes der Zähne (23) des Sektors (4) und daß die Auflagefläche (7) an der Stelle des Verankerungselementes (6) in bezug auf die Zone der Verzahnung des Sektors (4) einen erhöhten Durchgriffsbereich (27) aufweist, wobei dieser Durchgriffsbereich (27) im Inneren und in bezug auf den Kopf (32) eines Ankerbolzens (31) ein zweites Abstreifblatt (28) trägt, das gegen die Umfangsfläche (20) des Kranzes (2) ausgerichtet und an diese angenähert ist, und daß das Gehäuse (1) eine geneigte Flanke (26) aufweist, die sich entsprechend der inneren Flanke der Verbindung des gezahnten Sektors (4) mit dem Kranz (2) erstreckt, wenn sich der Arm (3) in seiner höchsten Stellung befindet.

2. Vorrichtung nach Anspruch 1, dadurch gekennzeichnet, daß das Verankerungselement (6) aus einem Gewindebolzen (31) gebildet ist, der frei eine Bohrung (30) durchgreift, die in der Wand der Auflagefläche (7) des Gehäuses (1) angeordnet ist und der am inneren Ende einen sich auf der Wand abstützenden Verankerungskopf (32) aufweist und am gegenüberliegenden Ende mit Gewinde versehen ist zum Einschrauben in ein Element (33) des besagten Trägers (35), und daß das äußere, mit Gewinde versehene Ende des Bolzens (31) der Verankerung (6) in ein Kulissenstück (33) zur Aufnahme in eine Nut (34) eines Maschinentisches (25) einstellbar einschraubbar ist.

3. Vorrichtung nach einem der Ansprüche 1 oder 2, dadurch gekennzeichnet, daß das gegenüberliegend zur Auflagefläche (7) des Gehäuses (1) angeordnete Abstreifblatt (29) mit einer Höhe versehen ist, die im wesentlichen der Distanz zwischen der Verzahnung des Sektors (4) und dem Kranz (2) entspricht.

FIG.1

0 115 724

FIG.2

FIG.3